# EUROPÄISCHE PATENTSCHRIFT

(11) **EP 1 209 109 B1**
(45) Veröffentlichungstag und Bekanntmachung des Hinweises auf die Patenterteilung: **04.10.2006**
(21) Anmeldenummer: 01120292.6
(22) Anmeldetag: 24.08.2001
(51) Int. Cl.: B65H 23/025, D06C 3/06

(54) **Breitstreckwalze**
Spreading roller
Rouleau élargisseur

(30) Priorität: 18.11.2000 DE 20019598 U
(43) Veröffentlichungstag der Anmeldung: 29.05.2002
(73) Patentinhaber: von Bronk Gummi- und Kunststofftechnik GmbH, 48653 Coesfeld (DE)
(72) Erfinder: Benson, Hans, 48653 Coesfeld (DE)
(74) Vertreter: Habbel, Hans-Georg

(56) Entgegenhaltungen:
- EP-A- 0 703 176
- WO-A-00/48933
- DE-A- 2 302 356
- US-A- 3 240 442

## Beschreibung

Eine gattungsblidende Breitstreckwalze ist aus der
EP 0 703 176 bekanntgeworden.

Bei dieser zum Stand der Technik gehörenden Breitstreckwalze wird im Gegensatz zu den bisher vorliegenden Vorschlägen für solche Breitstreckwalzen (z. B. DE-U-85 06 704) wirksam vermieden, daß sich Falten oder sonstige Verwerfungen der zulaufenden Materialbahn, die sich stets in Längsrichtung der Materialbahn erstrecken, in die an der Oberfläche des Breitstreckbelages der Breitstreckwalze befindlichen Einschnitte setzen oder einarbeiten können, denn diese Einschnitte verlaufen nicht in derselben Richtung wie die Laufrichtung der Materialbahn und damit der Falten oder Verwerfungen. Daher wird eine gleichförmige und einwandfreie Breitstreckung erreicht.

Nachteilig bei diesen zum Stand der Technik allgemein gehörenden Breitstreckwalzen ist die Tatsache, daß trotzdem noch bei sehr dünnem Bahnmaterial Abdrücke entstehen können.

Schwerwiegend wurde auch der Nachteil empfunden, daß sich die im Belag ausgearbeiteten Einschnitte zusetzen können, insbesondere dann, wenn die Breitstreckwalze in Betrieben eingesetzt wird, die mit einer Flotte arbeiten, z. B. Farbe oder Imprägnierungsmittel. Diese Flüssigkeit dringt in die Einschnitte ein und kann aus diesen Einschnitten nur sehr schwer entfernt werden, so daß dadurch der Anwendungsbereich der Breitstreckwalze eingeschränkt wird.

Der Erfindung liegt die Aufgabe zugrunde, die zum Stand der Technik gehörenden Breitstreckwalzen dahingehend zu verbessern, daß selbst bei dünner, zulaufender Materialbahn das Auftreten von Abdrücken in der Ware vermieden wird und daß weiterhin ein Ablagern von Materialien in den Einschnitten ausgeschlossen wird.

Diese der Erfindung zugrundeliegende Aufgabe wird dadurch gelöst, daß die eigentlichen Einschnitte oder Nuten in dem elastomeren Material mit einem Elastomer ausgefüllt sind, das eine andere Shorehärte aufweist als das elastomere Material des Belages.

Gemäß einer ersten Ausführungsform wird vorgeschlagen, daß in die Einschnitte ein elastomeres Material eingefüllt wird, das eine geringere Shorehärte aufweist als die Shorehärte des Belages.

Es ist offensichtlich, daß durch die Zugspannung des breit zu streckenden Materials die weicheren Einschnitte nachgeben können und die härteren Bereiche des elastomeren Mantelmaterials in den Nutbereich wandern können, wodurch die Breitstreckung des Bahnmaterials erfolgt.

Wird umgekehrt vorgegangen, d. h. die Einschnitte mit einem elastomeren Material ausgefüllt, das eine größere Shorehärte aufweist als der eigentliche Belag, bewirkt die Zugspannung des breit zu streckenden Materials, daß sich die härteren Nutelemente gegen den weicheren Belag drücken, diesen verdrängen und die härteren Nutelemente neigen sich nach außen, wodurch eine Breitstreckung des Bahnmaterials erfolgt.

Im Vergleich zum Stand der Technik wird also durch die Nuten oder Einschnitte die Breitstreckung erreicht, gleichzeitig werden aber die Nachteile der Nuten oder Einschnitte vermieden, d. h. in die bisher offenen Nuten oder Einschnitte kann kein Material eindringen, das sich hier ansammelt und insbesondere bei Farbflotten dazu zwingt, daß die Walze immer nur für eine bestimmte Farbsorte zur Anwendung kommt.

Ausführungsbeispiele der Erfindung werden nachfolgend anhand der Zeichnungen beschrieben. Die Zeichnungen zeigen dabei in
- Fig. 1: eine Anordnung, bei der die Einschnitte mit einem weicheren Elastomermaterial ausgefüllt sind und in
- Fig. 2: eine Ausführungsform, bei der die Einschnitte mit einem gegenüber dem elastomeren Material des Belages härteren Elastomer ausgefüllt sind.

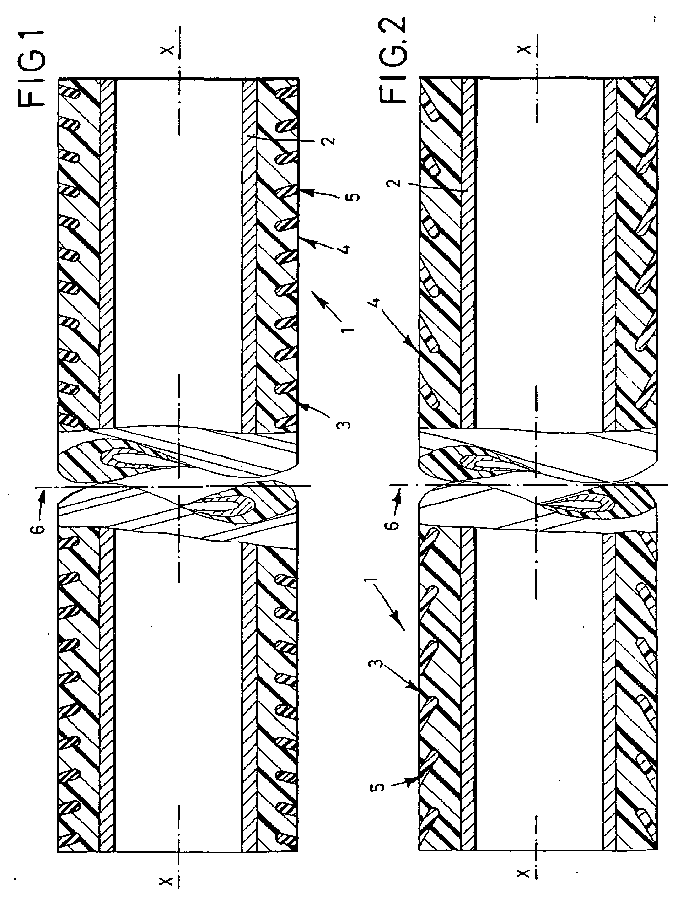

In der Zeichnung ist jeweils mit 1 der Teil einer Breitstreckwalze dargestellt und bezeichnet, die einen starren Walzenkörper 2 aufweist, der mit einem mantelförmigen Belag 3 aus elastomerem Werkstoff versehen ist. In diesen mantelförmigen Belag sind von der Mantelfläche 4 ausgehend zur Längsachse X - X des Walzenkörpers schräg verlaufende Einschnitte 5 vorgesehen, die beidseits der radialen Mittelebene 6 der Walze jeweils zu dem betreffenden Ende der Walze von innen nach außen geneigt sind. Bei der Anordnung gemäß Fig. 1 sind dabei die Einschnitte 5 mit einem elastomeren Material ausgefüllt, das eine geringere Shorehärte aufweist als das elastomere Material des mantelförmigen Belages 3, so daß die zwischen den Einschnitten 5 verbleibenden Stege sich in das elastomere Material der Einschnitte einpressen können, wenn das breit zu streckende Material zuläuft.

Bei der Anordnung gemäß Fig. 2 besteht der mantelförmige Belag aus einem elastomeren Material, das eine geringere Shorehärte aufweist als das elastomere Material, das in die Einschnitte 5 eingefüllt ist. Bei dieser Anordnung wird durch die Zugspannung des breit zu streckenden Materials die härteren Nutelemente, d. h. also der härtere Elastomer gegen den weicheren mantelförmigen Belag gedrückt, verdrängen diesen und neigen sich nach außen, wodurch die Breitstreckung des Bahnmaterials erfolgt. Ein Eintreten von Verunreinigungen oder Flüssigkeiten in die Einschnitte ist ausgeschaltet.

Das in die Einschnitte eingefüllte elastomere Material kann durch entsprechende Werkstoffe gebildet werden, z. B. auch durch einen geschlossenzelligen Schaum, wodurch in einfachster Weise die erforderliche Abdichtung und die notwendige Weichheit oder Härte erzielt werden kann.

## Patentansprüche

1. Breitstreckwalze (1) mit einem starren Walzenkörper (2) und einem auf dem Walzenkörper angeordneten mantelförmigen Belag (3) aus elastomerem Material, wobei der elastomere Belag von seiner Mantelfläche (4) ausgehende, zur Längsachse des Walzenkörpers schräg verlaufende Einschnitte (5) enthält, die beidseits der radialen Mittelebene (6) der Walze (1) jeweils zu dem betreffenden Ende der Walze von innen nach außen geneigt sind, **dadurch gekennzeichnet, daß** die Einschnitte (5) mit einem elastomeren Material (7) ausgefüllt sind, das eine andere Shorehärte aufweist als der Belag (3).

2. Breitstreckwalze nach Anspruch 1, **dadurch gekennzeichnet, daß** die Einschnitte (5) mit einem elastomeren Material (7) ausgefüllt sind, das eine geringere Shorehärte aufweist als der Belag (3).

3. Breitstreckwalze nach Anspruch 1, **dadurch gekennzeichnet, daß** die Einschnitte (5) mit einem elastomeren Material (7) ausgefüllt sind, das eine größere Shorehärte aufweist als der Belag (3).

## Claims

1. Spreading roller (1) with a rigid roller body (2) and a jacket shaped covering (3) made of elastomer material arranged on the roller body, in which the elastomer covering contains incisions (5) extending from the surface of the jacket running diagonally to the longitudinal axis of the roller body, which are bent from the inside to the outside on both sides of the radial middle plane (6) of the roller (1) at the relevant end of the roller, **characterised in that** the incisions (5) are filled with an elastomer material (7), which has a different Shore hardness to the covering (3).

2. Spreading roller according to claim 1, **characterised in that** the incisions (5) are filled with an elastomer material (7), which has a smaller Shore hardness than the covering (3).

3. Spreading roller according to claim 1, **characterised in that** the incisions (5) are filled with an elastomer material (7), which has a larger Shore hardness than the covering (3).

## Revendications

1. Rouleau élargisseur (1) avec un corps de rouleau rigide (2) et un revêtement (3) en forme d'enveloppe en matériau élastomère disposé sur le corps de rouleau, lequel revêtement élastomère contient des incisions (5) partant de sa surface d'enveloppe (4) et s'étendant de manière oblique par rapport à l'axe longitudinal du corps de rouleau, qui sont inclinées de l'intérieur vers l'extérieur de part et d'autre du plan médian radial (6) du rouleau (1) vers l'extrémité correspondante du rouleau, **caractérisé en ce que** les incisions (5) sont remplies avec un matériau élastomère (7) qui a une dureté Shore différente de celle du revêtement (3).

2. Rouleau élargisseur selon la revendication 1, **caractérisé en ce que** les incisions (5) sont remplies avec un matériau élastomère (7) qui a une dureté Shore inférieure à celle du revêtement (3).

3. Rouleau élargisseur selon la revendication 1, **caractérisé en ce que** les incisions (5) sont remplies avec un matériau élastomère (7) qui a une dureté Shore supérieure à celle du revêtement (3).
